(19) **Europäisches Patentamt / European Patent Office / Office européen des brevets**

(11) **EP 3 476 744 B1**

(12) **FASCICULE DE BREVET EUROPEEN**

(45) Date de publication et mention de la délivrance du brevet:
**11.12.2019 Bulletin 2019/50**

(21) Numéro de dépôt: **18200060.4**

(22) Date de dépôt: **12.10.2018**

(51) Int Cl.:
**B64D 45/04** (2006.01)   **B64F 1/18** (2006.01)
**G08G 5/04** (2006.01)   **G08G 5/02** (2006.01)
**G08G 5/00** (2006.01)   *G01S 13/94* (2006.01)
*G01S 13/91* (2006.01)   *G01C 5/00* (2006.01)

(54) **SYSTÈME D'AIDE À L'ATTERRISSAGE D'UN AÉRONEF EN PHASE D'APPROCHE D'UNE PISTE D'ATTERRISSAGE**

SYSTEM ZUR UNTERSTÜTZUNG DER LANDUNG EINES FLUGZEUGS IN DER ANFLUGPHASE EINER LANDEBAHN

AID SYSTEM FOR AN AIRCRAFT IN THE APPROACH PHASE TOWARDS A LANDING STRIP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2017 FR 1760251**

(43) Date de publication de la demande:
**01.05.2019 Bulletin 2019/18**

(73) Titulaire: **Airbus Operations S.A.S.**
**31060 Toulouse (FR)**

(72) Inventeur: **PINCHON, Thibault**
**31500 Toulouse (FR)**

(74) Mandataire: **Sarraméa, Claude**
**Airbus Operations (S.A.S)**
**XIF - M0101/1**
**316, route de Bayonne**
**31060 Toulouse Cedex (FR)**

(56) Documents cités:
**EP-A1- 0 674 300       EP-A1- 0 717 330**
**FR-A1- 2 915 610       FR-A1- 3 044 298**
**US-A1- 2002 089 433    US-A1- 2004 093 131**

Remarques:
Le dossier contient des informations techniques présentées postérieurement au dépôt de la demande et ne figurant pas dans le présent fascicule.

**Description**

DOMAINE TECHNIQUE

La présente invention concerne le domaine de l'aéronautique et plus particulièrement l'aide à l'atterrissage d'un aéronef en phase d'approche d'une piste d'atterrissage. L'invention s'inscrit dans le cadre plus général de la prévention des accidents de collision avec le sol en vol piloté.

ÉTAT DE LA TECHNIQUE

Ce type d'accident est connu dans la littérature technique sous l'acronyme CFIT (« Controlled Flight Into Terrain » en anglais).

Alors qu'ils constituaient dans le passé une proportion importante des catastrophes aériennes, les accidents de type CFIT sont désormais évités pour la plupart, grâce à des manœuvres d'évitement du terrain effectuées par les équipages sous l'incitation d'alertes et alarmes provenant de systèmes embarqués de signalisation automatique des risques de collision avec le terrain, connus sous le vocable de système TAWS (« Terrain Awareness and Warning Systems » en anglais) dont font partie le système EGPWS (« Enhanced Ground Proximity Warning System » en anglais) et le système GCAS (« Ground Collision Avoidance System » en anglais).

Généralement, ces systèmes comparent la position courante de l'aéronef à une base de données embarquée, modélisant un volume de protection qui est fonction du terrain survolé. L'équipage est averti en cas de risque de collision avec le sol afin que les pilotes puissent modifier la trajectoire de l'aéronef.

Lors d'une approche avant un atterrissage, l'aéronef se trouve à proximité du terrain survolé. Ainsi, afin d'éviter toute alerte non compatible avec une telle phase d'approche, les systèmes TAWS sont désensibilisés dès le début de l'approche par un durcissement des conditions d'activation des alertes, puis sont totalement inhibés durant l'approche finale ; c'est-à-dire plus aucune alerte n'est alors émise.

Des améliorations des systèmes TAWS ont été proposées pour prolonger la protection au plus près de la piste d'atterrissage.

Par exemple, le document FR 3044298 décrit un procédé d'aide à l'atterrissage. Ce procédé propose la combinaison de deux conditions complémentaires afin d'éviter une chute anormale d'un aéronef dans le cas d'un accident de type CFIT. La première condition permet d'évaluer le risque de collision avec le sol vis-à-vis d'une capacité de l'aéronef à réaliser une manœuvre d'évitement sans risque par une remise des gaz. La deuxième condition permet d'évaluer le risque de collision avec le sol vis-à-vis d'une absence de convergence de la trajectoire de l'aéronef avec le seuil de piste. La combinaison simultanée des deux conditions permet à la fois de réduire des alertes intempestives en phase d'approche et de poursuivre la surveillance de l'aéronef pendant toute la phase d'approche, y compris l'approche finale jusqu'au seuil de piste.

Toutefois, ce procédé n'est pas complètement satisfaisant. En effet, il autorise notamment dans certaines situations l'émission d'alertes intempestives qui amènent le pilote à effectuer des manœuvres de remise des gaz qui ne sont pas nécessaires.

Les documents EP0717330A1, US2004/093131A1 et EP0674300A1 divulguent également des procédés d'aide à l'atterrissage selon l'art antérieur. En particulier, le document EP0717330A1 divulgue un procédé comprenant une étape de calcul d'une trajectoire de l'aéronef par extrapolation à partir d'une position courante de l'aéronef, une étape consistant à déterminer si la trajectoire interpolée coupe le sol avant un seuil de la piste d'atterrissage, puis une étape d'émission d'une alerte si la trajectoire interpolée coupe le sol avant le seuil de la piste d'atterrissage.

EXPOSÉ DE L'INVENTION

La présente invention a pour objet de pallier ces inconvénients en proposant un procédé et un système d'aide à l'atterrissage permettant de réduire l'émission d'alertes intempestives.

À cet effet, l'invention concerne un procédé d'aide à l'atterrissage d'un aéronef en phase d'approche d'une piste d'atterrissage, selon la revendication 1.

Ainsi, grâce à l'invention, le nombre d'alertes intempestives, pouvant causer notamment des manœuvres de remise des gaz qui ne sont pas nécessaires, est diminué significativement.

En outre, la trajectoire extrapolée calculée dans l'étape de calcul est extrapolée à partir de la position courante, de la vitesse courante et de l'accélération courante de l'aéronef.

De plus, la première étape de détermination consiste à déterminer :

- si la trajectoire extrapolée de l'aéronef passe sous une altitude prédéterminée à la verticale du seuil de la piste d'atterrissage, ou

- si la trajectoire extrapolée de l'aéronef passe, à l'altitude du seuil de la piste d'atterrissage, avant une position auxiliaire en amont de celle du seuil de piste selon un axe longitudinal de la piste.

Selon un mode de réalisation, l'altitude prédéterminée correspond à l'altitude du seuil de piste, la position auxiliaire correspondant à la position du seuil de piste selon l'axe longitudinal.

Selon une variante, l'altitude prédéterminée correspond à l'altitude du seuil de piste à une marge près, la position auxiliaire correspondant à la position du seuil de piste selon l'axe longitudinal à une marge près.

Par ailleurs, la deuxième étape de détermination consiste à comparer la hauteur courante de l'aéronef avec une hauteur seuil prédéterminée, la hauteur courante étant considérée comme hauteur à risque si ladite hauteur courante est inférieure à la hauteur seuil prédéterminée.

Avantageusement, la hauteur seuil prédéterminée est fonction de la distance horizontale entre l'aéronef et la piste d'atterrissage.

Par exemple, la hauteur seuil est égale à la différence entre, d'une part, une première hauteur correspondant à une hauteur nominale comprise dans une trajectoire d'approche nominale à une distance courante de l'aéronef par rapport au seuil de la piste d'atterrissage et, d'autre part, une deuxième hauteur correspondant à une hauteur comprise dans une surface prédéterminée à la verticale de la position courante de l'aéronef.

En outre, la surface prédéterminée correspond à une surface établissant des limites de hauteur autour de la piste d'atterrissage.

Selon une variante, la surface prédéterminée correspond à une surface établissant des limites de hauteur autour de la piste d'atterrissage à une marge près.

De façon non limitative, la distance seuil prédéterminée est sensiblement égale à 3 NM.

L'invention concerne également un système d'aide à l'atterrissage d'un aéronef en phase d'approche d'une piste d'atterrissage, selon la revendication 8.

Selon une particularité, le premier module de détermination est configuré pour déterminer :

- si la trajectoire extrapolée de l'aéronef passe sous une altitude prédéterminée à la verticale du seuil de la piste d'atterrissage, ou
- si la trajectoire extrapolée de l'aéronef passe, à l'altitude du seuil de la piste d'atterrissage, avant une position auxiliaire en amont de celle du seuil de piste selon un axe longitudinal de la piste.

L'invention concerne également un système d'aide à l'atterrissage d'un aéronef en phase d'approche d'une piste d'atterrissage.

Le système comprend :

- un module de calcul configuré pour calculer par extrapolation une trajectoire de l'aéronef à partir d'une position courante de l'aéronef,
- un premier module de détermination configuré pour déterminer si la trajectoire extrapolée de l'aéronef coupe le sol avant un seuil de la piste d'atterrissage.

Selon l'invention, le système comprend :

- un module de mesure configuré pour mesurer une hauteur courante de l'aéronef au-dessus d'un terrain survolé,
- un deuxième module de détermination configuré pour déterminer si la hauteur courante correspond à une hauteur considérée comme une hauteur à risque,
- un module d'alerte configuré pour générer une alerte destinée à un équipage de l'aéronef uniquement si les deux condition suivantes sont remplies :

  ◦ les deux déterminations réalisées par les deux modules de détermination sont positives, et
  ◦ l'aéronef se situe à une distance par rapport au seuil de la piste d'atterrissage inférieure à une distance seuil prédéterminée.

Selon une particularité, le premier module de détermination est configuré pour déterminer :

- si la trajectoire extrapolée de l'aéronef passe sous une altitude prédéterminée à la verticale du seuil de la piste d'atterrissage, ou
- si la trajectoire extrapolée de l'aéronef passe, à l'altitude du seuil de la piste d'atterrissage, avant une position auxiliaire en amont de celle du seuil de piste selon un axe longitudinal de la piste.

Selon une autre particularité, le deuxième module de détermination est configuré pour comparer la hauteur courante de l'aéronef avec une hauteur seuil, la hauteur courante étant considérée comme risquée si ladite hauteur courante est inférieure à une hauteur seuil prédéterminée.

L'invention concerne en outre un aéronef comportant un système d'aide à l'atterrissage d'un aéronef en phase d'approche d'une piste d'atterrissage, tel que celui spécifié ci-dessus.

BRÈVE DESCRIPTION DES FIGURES

L'invention, avec ses caractéristiques et avantages, ressortira plus clairement à la lecture de la description faite en référence aux dessins annexés dans lesquels :

- la figure 1 représente un schéma synoptique du système d'aide à l'atterrissage,
- la figure 2 représente un schéma synoptique du procédé d'aide à l'atterrissage,
- la figure 3 représente une trajectoire extrapolée pour l'évaluation d'un premier risque de collision avec le sol lors d'une phase d'approche d'un aéronef,
- la figure 4 représente une trajectoire d'approche nominale et une surface établissant des limites de hauteur autour de la piste d'atterrissage pour l'évaluation d'un deuxième risque de collision avec le sol lors d'une phase d'approche d'un aéronef.

DESCRIPTION DÉTAILLÉE

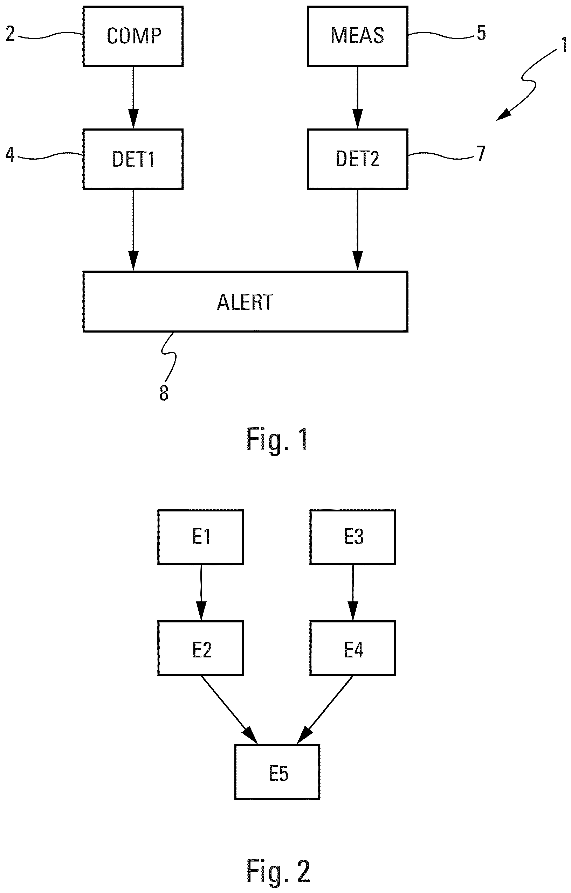

La figure 1 représente un mode de réalisation d'un système d'aide à l'atterrissage 1 d'un aéronef AC en phase d'approche d'une piste d'atterrissage T d'un aéroport. Dans la suite de la description, le système d'aide à l'atterrissage 1 d'un aéronef AC en phase d'approche d'une piste d'atterrissage T est appelé système d'aide à l'atterrissage 1.

Le système d'aide à l'atterrissage 1, embarqué sur l'aéronef AC, comprend des modules 2, 4, 5, 7, 8 permettant d'évaluer deux conditions qui doivent être simultanément remplies pour émettre une alarme. La première condition est basée sur l'évaluation de deux risques de collision avec le sol. Si les deux risques sont tous les deux avérés, la première condition est remplie. Une deuxième condition est basée sur l'évaluation de la distance 11 de l'aéronef AC par rapport au seuil S de la piste d'atterrissage T. Si la distance 11 par rapport au seuil S de la piste d'atterrissage T est inférieure à une distance seuil, la deuxième condition est remplie.

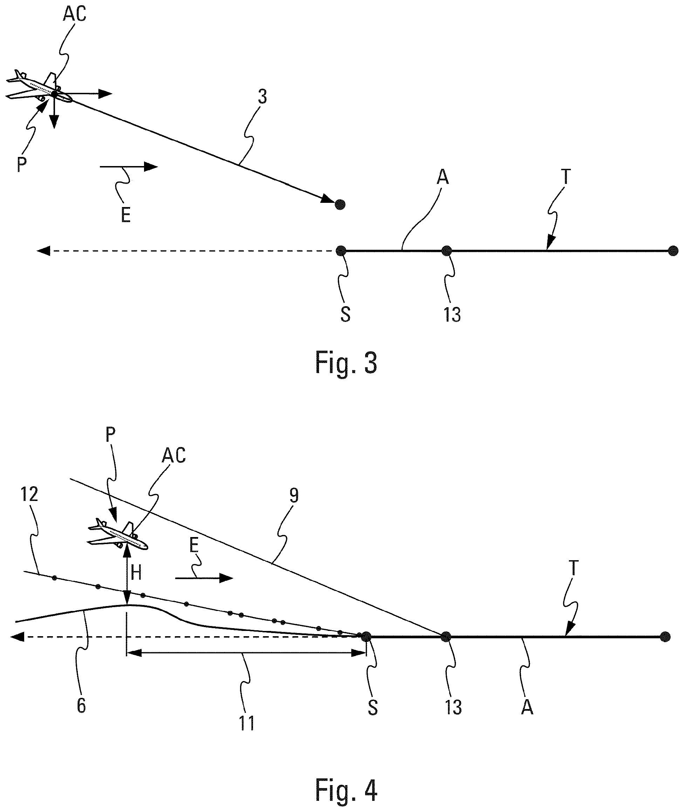

Le système d'aide à l'atterrissage 1 comprend un module de calcul COMP (COMP pour « computational module » en anglais) 2 configuré pour calculer par extrapolation une trajectoire 3 de l'aéronef AC à partir d'une position courante P de l'aéronef AC et un module de détermination DET1 (DET pour « determination module » en anglais) 4 configuré pour déterminer si la trajectoire extrapolée 3 de l'aéronef AC coupe le sol avant un seuil S de la piste d'atterrissage T. (Figure 3)

Le calcul par extrapolation de la trajectoire 3 de l'aéronef AC par le module de calcul 2 peut correspondre à la détermination d'une projection à court terme (par exemple sur 10 secondes à 20 secondes) de la trajectoire courante de l'aéronef AC. Puis, le module de détermination 4 détermine si cette projection de trajectoire coupe le sol avant le seuil S de la piste d'atterrissage T.

Cette trajectoire 3 est dite à court terme car elle suppose qu'aucune action de pilotage ne sera engagée, ce qui n'est pas valable à plus long terme surtout lors d'une phase d'approche où des ajustements de pilotage sont généralement effectués. Il s'agit donc d'une trajectoire « normale » de l'aéronef AC compte tenu de sa configuration courante, sans manœuvre d'évitement.

Tout estimateur ou prédicteur de trajectoire répondant à ce besoin peut être utilisé. De préférence, celui-ci peut être mis en œuvre sous forme d'instructions de code dans un calculateur embarqué.

L'estimation de la trajectoire 3 à court terme s'appuie préférentiellement sur les position P, vitesse et accélération courantes de l'aéronef AC, disponibles via des dispositifs de géopositionnement tel qu'un dispositif GPS (pour « Global Positioning System » en anglais) et/ou une centrale inertielle, tel qu'un dispositif IRS (pour « Inertial Reference System » en anglais) et/ou un dispositif barométrique. Ces paramètres délivrés par ces dispositifs peuvent être utilisés bruts ou filtrés (sur plusieurs instants) afin de réduire l'instabilité du résultat due au bruit de mesure (notamment pour l'accélération).

En fonction du temps t, la position courante $P(t) = (X(t), Y(t), Z(t))$, la vitesse $V(t)$ et l'accélération $A(t)$ de l'aéronef peuvent être déterminées en temps réel à l'aide de capteurs avioniques embarqués ou d'instruments de vol.

La piste d'atterrissage T comporte un seuil S de piste S $(X_S, Y_S, Z_S)$ et est orientée selon un axe longitudinal A exprimé généralement avec un angle par rapport au nord géographique.

Pour simplifier les explications, il est fait référence, dans la suite, au déplacement de l'aéronef AC dans le plan vertical passant par l'axe longitudinal A de la piste P. En effet, la phase d'approche, au moins finale, de l'aéronef AC est traditionnellement effectuée dans ce plan, car l'aéronef AC est aligné avec l'axe longitudinal A de la piste P.

On pourra donc définir le seuil S de piste P comme origine du repère Piste considéré. Ainsi, X(t) (X>0 avant le seuil ; X<0 après le seuil, dans le sens E de déplacement de l'aéronef AC) est la position horizontale de l'aéronef AC (ou distance au sol de l'aéronef AC avec le seuil S de piste T) et Z(t) est l'altitude ou hauteur de l'aéronef AC en fonction du temps t. Dans ce repère, la phase d'approche de l'aéronef AC se passe dans le quadrant {X>0 et Z>0}.

Des considérations tridimensionnelles ne modifient pas les enseignements de l'invention, et nécessitent uniquement des calculs plus complexes de trajectoires, à la portée de l'homme du métier.

L'estimation de la trajectoire 3 à court terme vise à évaluer par exemple la hauteur de l'aéronef au passage (donc à la verticale) du seuil S de piste T, c'est-à-dire évaluer Z(t) lorsque X(t)=0.

La trajectoire 3 à court terme d'un aéronef AC peut être extrapolée à l'aide d'un développement limité. L'ordre du développement limité a un impact sur la précision et la stabilité de la prévision. Dans un mode de réalisation, un développement limité d'ordre 2 est utilisé comme suit, sachant que l'instant courant est $t_0$ :

$$Z(t) = z(t_0) + t \times V_Z(t_0) + \frac{t^2}{2} \times A_Z(t_0)$$

où $V_z(t_0)$ et $A_z(t_0)$ sont les composantes verticales de la vitesse (négative en cas de descente) et de l'accélération (généralement positive car décélération selon l'axe décroissant des altitudes Z) de l'aéronef AC à l'instant $t_0$.

De même,

$$X(t) = X(t_0) + t \times V_X(t_0) + \frac{t^2}{2} \times A_X(t_0).$$

Un tel développement limité présente l'avantage d'être simple, et donc facilement utilisé par des calculateurs embarqués.

Le module de détermination 4 permet d'évaluer un premier risque de collision avec le sol en déterminant si la trajectoire extrapolée 3 de l'aéronef AC coupe le sol avant le seuil S de la piste d'atterrissage T.

La détermination effectuée par le module de détermination 4 est positive si la trajectoire extrapolée 3 de l'aéronef AC coupe le sol avant le seuil S de la piste d'atterrissage T.

Cette détermination peut être réalisée :

- soit en déterminant si la trajectoire extrapolée 3 de l'aéronef AC passe sous une altitude prédéterminée $Z_{risque}$ à la verticale du seuil S de la piste d'atterrissage T, c'est-à-dire, si à un instant $t_{seuil}$ où l'aéronef AC passe à la verticale du seuil S $X(t_{seuil}) = 0$, on a $Z(t_{seuil}) < Z_{risque}$ ;
- soit en déterminant si la trajectoire extrapolée 3 de l'aéronef AC passe, à l'altitude ($Z = 0$) du seuil S de la piste d'atterrissage T, avant une position $X_{risque}$ auxiliaire amont de celle du seuil de piste $X_S$ du seuil de piste selon un axe longitudinal A de la piste d'atterrissage T, c'est-à-dire si à un instant $t_{seuil}$ où l'aéronef AC passe à l'altitude du seuil $Z(t_{seuil}) = 0$, on a $X(t_{seuil}) > X_{risque}$. Notamment, l'altitude prédéterminée ou la position auxiliaire correspond à l'altitude du seuil S de piste T (c'est-à-dire $Z_{risque} = 0$) ou la position du seuil S de piste T selon l'axe longitudinal A (c'est-à-dire $X_{risque} = 0$), respectivement. En variante, des marges (positives et/ou négatives) peuvent être prises pour régler la sensibilité du système. Ces marges sont représentatives d'une hauteur de sécurité de l'aéronef AC au-dessus du seuil de piste.

Ce premier risque représente le risque que l'aéronef AC touche le sol avant le seuil S de piste T.

En reprenant l'exemple du développement limité d'ordre 2 ci-dessus :

$$Z(t) = z(t_0) + t \times V_Z(t_0) + \frac{t^2}{2} \times A_Z(t_0),$$

et

$$X(t) = X(t_0) + t \times V_X(t_0) + \frac{t^2}{2} \times A_X(t_0),$$

on suppose que l'accélération horizontale est négligeable et on note $t_{seuil}$ l'instant où l'aéronef franchit le seuil S de piste

T, $X(t_{seuil})$ = 0.

On a donc

$$t_{\text{seuil}} = V_X(t_0)/X(t_0).$$

Ainsi,

$$Z(t_{\text{seuil}}) = Z(t_0) + \frac{V_X(t_0)}{X(t_0) \times V_Z(t_0)} + \frac{1}{2}\left(\frac{V_X(t_0)}{X(t_0)}\right)^2 \times A_Z(t_0).$$

La valeur $Z(t_{seuil})$ peut donc être calculée par le module de détermination 4.

Le système d'aide à l'atterrissage 1 comprend en outre un module de mesure MEAS (MEAS pour « measuring module » en anglais) 5 configuré pour mesurer une hauteur courante H de l'aéronef AC au-dessus d'un terrain survolé 6 et un module de détermination DET2 7 configuré pour déterminer si la hauteur courante H correspond à une hauteur considérée comme une hauteur à risque.

Le module de mesure 5 peut comprendre un radioaltimètre embarqué sur l'aéronef AC pour mesurer la hauteur courante H de l'aéronef AC au-dessus du sol 6.

Le module de détermination 7 permet d'évaluer un deuxième risque de collision avec le sol en déterminant si la hauteur courante H de l'aéronef AC est une hauteur à risque.

La détermination effectuée par le module de détermination 7 est positive si la hauteur courante H de l'aéronef AC correspond à une hauteur considérée comme une hauteur à risque.

Ainsi, le module de détermination 7 peut déterminer si la hauteur courante H de l'aéronef AC est une hauteur à risque en comparant ladite hauteur courante H à une hauteur seuil prédéterminée.

La hauteur courante H est considérée comme hauteur à risque si ladite hauteur courante H est inférieure à la hauteur seuil prédéterminée.

Préférentiellement, la hauteur seuil prédéterminée est fonction de la distance horizontale entre l'aéronef AC et la piste d'atterrissage T.

Selon un mode de réalisation, la hauteur seuil est égale à la différence entre, d'une part, une première hauteur correspondant à une hauteur nominale comprise dans une trajectoire d'approche nominale 9 à une distance courante 11 de l'aéronef AC par rapport au seuil S de la piste d'atterrissage T et, d'autre part, une deuxième hauteur correspondant à une hauteur comprise dans une surface prédéterminée 12 à la verticale de la position courante P de l'aéronef AC.

La trajectoire d'approche nominale 9 correspond, par exemple, à une trajectoire présentant une pente à 5% ou un angle de 3 degrés par rapport à l'axe longitudinale A de la piste d'atterrissage T et prévoyant un touché 13 de piste d'atterrissage T à 300 mètres après le seuil S de piste T.

La surface prédéterminée 12 peut correspondre à une surface établissant des limites de hauteur autour de la piste d'atterrissage T. Par exemple, cette surface 12 correspond à la surface de limitation d'obstacles ou surface OLS (pour « Obstacle Limitation Surface » en anglais) de la section finale. Une surface OLS définie la limite jusqu'à laquelle des objets (obstacles et terrain) peuvent se projeter dans l'espace aérien. La surface OLS est définie par l'Organisation de l'aviation civile international (OACI) (« International Civil Aviation Organization » ou « ICAO » en anglais) pour des pistes d'atterrissage de catégories données. Par exemple, pour des pistes de catégories 3 et 4, les trajectoires basées sur ces surfaces OLS présentent des pentes de 2%. En variante, des marges (positives et/ou négatives) peuvent être prises par rapport à la surface 12 établissant des limites de hauteur autour de la piste d'atterrissage T.

Une fois que les deux modules de détermination 4 et 7 ont évalué les risques, une alerte peut être émise ou non en fonction de l'évaluation desdits risques.

Le système d'aide à l'atterrissage 1 comprend donc également un module d'alerte ALERT (ALERT pour « alert module » en anglais) 8 configuré pour générer une alerte destinée à un équipage de l'aéronef AC uniquement si deux conditions sont remplies.

Une première condition consiste à savoir si les deux déterminations réalisées par les deux modules de détermination 4 et 7 sont positives, c'est-à-dire si les deux risques sont avérés.

La deuxième condition consiste à savoir si l'aéronef AC se situe à une distance 11 par rapport au seuil S de la piste d'atterrissage T inférieure à une distance seuil prédéterminée.

De façon non limitative, la distance seuil prédéterminée est sensiblement égale à 3 NM (5556 m environ).

Le module d'alerte 8 permet ainsi de générer une alerte destinée à l'équipage uniquement si les deux risques sont avérés et si l'aéronef AC se situe à une distance 11 par rapport au seuil S de la piste d'atterrissage T inférieure à la distance seuil prédéterminée.

Cette génération peut consister à produire un message d'alerte ou à laisser passer un message d'alerte provenant de systèmes embarqués de signalisation automatique des risques de collision avec le sol. Dans ce dernier cas, le système d'aide à l'atterrissage 1 officie comme filtre des messages provenant des systèmes embarqués, pour supprimer des messages intempestifs et peu appropriés à la situation courante.

Des alertes dédiées et spécifiques à la combinaison de risques évalués peuvent être proposées. Dans les deux cas, il est également possible de reprendre les alertes du système TAWS déjà existantes. Dans une combinaison de ces deux possibilités, on peut prévoir des alertes dédiées et spécifiques en complément de celles du système TAWS, en modifiant l'inhibition du système TAWS afin de profiter des alertes existantes pendant la phase finale d'approche.

Deux natures d'alerte peuvent être prévues :

- d'une part, une alerte visuelle. Dans ce cas, une liaison est utilisée entre un calculateur qui peut héberger les modules 2, 4, 5, 7, 8 du système d'aide à l'atterrissage 1 et un générateur de message visuel sur un écran de vol principal (PFD pour « Primary Flight Display » en anglais), une lampe dédiée, etc. situés dans le poste de pilotage de l'aéronef AC ; et
- d'autre part, une alerte sonore ou orale. Dans ce cas, une liaison est utilisée entre le calculateur qui peut héberger les modules 2, 4, 5, 7, 8 du système d'aide à l'atterrissage 1 et un générateur de message audio situé dans le poste de pilotage de l'aéronef AC.

De même, plusieurs niveaux d'alerte peuvent être prévus, s'appuyant par exemple sur différentes marges définissant différentes altitudes prédéterminées $Z_{risque}$ et/ou positions auxiliaires $X_{risque}$ utilisées pour évaluer le premier risque.

Par exemple, deux niveaux d'alerte peuvent être proposés :

- l'un servant de premier avertissement pour l'équipage. À ce stade, le risque de collision avec le sol n'est pas imminent car les marges utilisées sont importantes, ce qui permet de déclencher l'alerte préventive plusieurs secondes avant que le risque ne devienne imminent. La procédure associée à cette alerte consiste à corriger la trajectoire (généralement se rapprocher de la trajectoire nominale 9) afin de retrouver une situation sans risque. Cependant, si aucune correction de trajectoire n'est engagée par le pilote, le risque augmentera de sorte à basculer vers le deuxième niveau d'alerte ;
- l'autre servant d'avertissement d'un risque imminent. Cette alerte s'appuie sur les algorithmes décrits plus haut avec des marges minimes, mais suffisantes pour éviter la collision si une action, généralement de manœuvre d'évitement (interruption de l'approche et remise maximale des gaz), est immédiatement prise par le pilote.

Selon un mode de réalisation, les modules 2, 4, 5, 7, 8 sont intégrés dans une unité centrale ou un calculateur.

À titre d'exemple, les modules 2, 4, 5, 7, 8 du système d'aide à l'atterrissage 1 correspondent à des algorithmes mis en œuvre de façon logicielle dans l'unité centrale. En particulier, les modules 2, 4, 5, 7, 8 peuvent être stockés dans au moins une zone mémoire de l'unité centrale.

Le système d'aide à l'atterrissage 1 met en œuvre un procédé d'aide à l'atterrissage d'un aéronef AC en phase d'approche d'une piste d'atterrissage T.

Le procédé (figure 2) comprend les étapes suivantes :

- une étape E1 de calcul, mise en œuvre par le module de calcul 2, consistant à calculer par extrapolation une trajectoire 3 de l'aéronef AC à partir d'une position courante P de l'aéronef AC,
- une étape E2 de détermination, mise en œuvre par le module de détermination 4, consistant à déterminer si la trajectoire extrapolée 3 de l'aéronef AC coupe le sol avant un seuil S de la piste d'atterrissage T.
- une étape E3 de mesure, mise en œuvre par le module de mesure 5, consistant à mesurer une hauteur courante H de l'aéronef AC au-dessus d'un terrain survolé 6,
- une étape E4 de détermination, mise en œuvre par le module de détermination 7, consistant à déterminer si la hauteur courante H correspond à une hauteur considérée comme une hauteur à risque,
- une étape E5 d'alerte, mise en œuvre par le module d'alerte 8, consistant à générer une alerte destinée à un équipage de l'aéronef AC uniquement si les deux conditions suivantes sont remplies :

  ◦ les deux déterminations des deux étapes E2 et E4 de détermination sont positives, et
  ◦ l'aéronef AC se situe à une distance par rapport au seuil S de la piste d'atterrissage T inférieure à une distance seuil prédéterminée.

L'étape E2 de détermination peut consister à déterminer :

- si la trajectoire extrapolée 3 de l'aéronef AC passe sous une altitude prédéterminée à la verticale du seuil S de la piste d'atterrissage T, ou
- si la trajectoire extrapolée 3 de l'aéronef AC passe, à l'altitude du seuil S de la piste d'atterrissage T, avant une position auxiliaire en amont de celle du seuil S de piste T selon un axe longitudinal A de la piste T.

L'étape E4 de détermination peut consister à comparer la hauteur courante H de l'aéronef AC avec une hauteur seuil prédéterminée. La hauteur courante H est considérée comme hauteur à risque si ladite hauteur courante H est inférieure à une hauteur seuil prédéterminée.

**Revendications**

1. Procédé d'aide à l'atterrissage d'un aéronef (AC) en phase d'approche d'une piste d'atterrissage (T), comprenant les étapes suivantes :

   - une étape (E1) de calcul, mise en œuvre par un module de calcul (2), consistant à calculer par extrapolation une trajectoire (3) de l'aéronef (AC) à partir d'une position courante (P) de l'aéronef (AC),
   - une première étape (E2) de détermination, mise en œuvre par un premier module de détermination (4), consistant à déterminer si la trajectoire extrapolée (3) de l'aéronef (AC) coupe le sol avant un seuil (S) de la piste d'atterrissage (T) ;
   - une étape (E3) de mesure, mise en œuvre par un module de mesure (5), consistant à mesurer une hauteur courante (H) de l'aéronef (AC) au-dessus d'un terrain survolé (6),
   - une deuxième étape (E4) de détermination, mise en œuvre par un deuxième module de détermination (7), consistant à déterminer si la hauteur courante (H) correspond à une hauteur considérée comme une hauteur à risque,

   **caractérisé en ce que** la deuxième étape (E4) de détermination consiste à comparer la hauteur courante (H) de l'aéronef (AC) avec une hauteur seuil prédéterminée, la hauteur courante (H) étant considérée comme hauteur à risque si ladite hauteur courante (H) est inférieure à la hauteur seuil prédéterminée,la hauteur seuil étant égale à la différence entre, d'une part, une première hauteur correspondant à une hauteur nominale comprise dans une trajectoire d'approche nominale à une distance courante de l'aéronef (AC) par rapport au seuil (S) de la piste d'atterrissage (T) et, d'autre part, une deuxième hauteur correspondant à une hauteur comprise dans une surface prédéterminée à la verticale de la position courante (P) de l'aéronef, la surface prédéterminée correspondant à :- une surface établissant des limites de hauteur autour de la piste d'atterrissage (T) ; ou- une surface établissant des limites de hauteur autour de la piste d'atterrissage (T) à une marge près,

   - une étape (E5) d'alerte, mise en œuvre par un module d'alerte (8), consistant à générer une alerte destinée à un équipage de l'aéronef (AC) uniquement si les deux conditions suivantes sont simultanément remplies :

     ◦ les deux déterminations des deux étapes (E2, E4) de détermination sont positives, et
     ◦ l'aéronef (AC) se situe à une distance par rapport au seuil (S) de la piste d'atterrissage (T) inférieure à une distance seuil prédéterminée.

2. Procédé selon la revendication 1,
   **caractérisé en ce que** la trajectoire extrapolée (3) calculée dans l'étape (E1) de calcul est extrapolée à partir de la position courante (P), de la vitesse courante et de l'accélération courante de l'aéronef (AC).

3. Procédé selon l'une quelconque des revendications 1 ou 2,
   **caractérisé en ce que** la première étape (E2) de détermination consiste à déterminer :

   - si la trajectoire extrapolée (3) de l'aéronef (AC) passe sous une altitude prédéterminée à la verticale du seuil (S) de la piste d'atterrissage (T), ou
   - si la trajectoire extrapolée (3) de l'aéronef (AC) passe, à l'altitude du seuil (S) de la piste d'atterrissage (T), avant une position auxiliaire en amont de celle du seuil (S) de piste (T) selon un axe longitudinal (A) de la piste (T).

4. Procédé selon la revendication 3,
   **caractérisé en ce que** l'altitude prédéterminée correspond à l'altitude du seuil (S) de piste (T), la position auxiliaire correspondant à la position du seuil (S) de piste (T) selon l'axe longitudinal (A).

**5.** Procédé selon la revendication 3,
**caractérisé en ce que** l'altitude prédéterminée correspond à l'altitude du seuil (S) de piste (T) à une marge près, la position auxiliaire correspondant à la position du seuil (S) de piste (T) selon l'axe longitudinal (A) à une marge près.

**6.** Procédé selon l'une quelconque des revendications 1 à 5,
**caractérisé en ce que** la hauteur seuil prédéterminée est fonction de la distance horizontale entre l'aéronef (AC) et la piste d'atterrissage (T).

**7.** Procédé selon l'une quelconque des revendications 1 à 6,
**caractérisé en ce que** la distance seuil prédéterminée est sensiblement égale à 3 NM.

**8.** Système d'aide à l'atterrissage d'un aéronef (AC) en phase d'approche d'une piste d'atterrissage (T), comprenant :

- un module de calcul (2) configuré pour calculer par extrapolation une trajectoire (3) de l'aéronef (AC) à partir d'une position courante (P) de l'aéronef (AC),
- un premier module de détermination (4) configuré pour déterminer si la trajectoire extrapolée (3) de l'aéronef (AC) coupe le sol avant un seuil (S) de la piste d'atterrissage (T) ;
- un module de mesure (5) configuré pour mesurer une hauteur courante (H) de l'aéronef (AC) au-dessus d'un terrain survolé (6),
- un deuxième module de détermination (7) configuré pour déterminer si la hauteur courante (H) correspond à une hauteur considérée comme une hauteur à risque,
- un module d'alerte (8) configuré pour générer une alerte destinée à un équipage de l'aéronef (AC) uniquement si les deux conditions suivantes sont remplies :

  ◦ les deux déterminations réalisées par les deux modules de détermination (4, 7) sont positives, et
  ◦ l'aéronef (AC) se situe à une distance (11) par rapport au seuil (S) de la piste d'atterrissage (T) inférieure à une distance seuil prédéterminée,

**caractérisé en ce que** deuxième module de détermination (7) est configuré pour comparer la hauteur courante (H) de l'aéronef (AC) avec une hauteur seuil prédéterminée, la hauteur courante (H) étant considérée comme hauteur à risque si ladite hauteur courante (H) est inférieure à la hauteur seuil prédéterminée,
la hauteur seuil étant égale à la différence entre, d'une part, une première hauteur correspondant à une hauteur nominale comprise dans une trajectoire d'approche nominale (9) à une distance courante (11) de l'aéronef (AC) par rapport au seuil (S) de la piste d'atterrissage (T) et, d'autre part, une deuxième hauteur correspondant à une hauteur comprise dans une surface prédéterminée (12) à la verticale de la position courante (P) de l'aéronef, la surface prédéterminée correspondant à :

- une surface établissant des limites de hauteur autour de la piste d'atterrissage (T) ; ou
- une surface établissant des limites de hauteur autour de la piste d'atterrissage (T) à une marge près.

**9.** Système selon la revendication 8,
**caractérisé en ce que** le premier module de détermination (4) est configuré pour déterminer :

- si la trajectoire extrapolée (3) de l'aéronef (AC) passe sous une altitude prédéterminée à la verticale du seuil (S) de la piste d'atterrissage (T), ou
- si la trajectoire extrapolée (3) de l'aéronef (AC) passe, à l'altitude du seuil (S) de la piste d'atterrissage (T), avant une position auxiliaire en amont de celle du seuil (S) de piste (T) selon un axe longitudinal (A) de la piste (T).

**10.** Système selon l'une quelconque des revendications 8 ou 9,
**caractérisé en ce que** le deuxième module de détermination (7) est configuré pour comparer la hauteur courante (H) de l'aéronef (AC) avec une hauteur seuil, la hauteur courante (H) étant considérée comme risquée si ladite hauteur courante (H) est inférieure à une hauteur seuil prédéterminée.

**11.** Aéronef,
**caractérisé en ce qu'**il comporte un système d'aide à l'atterrissage (1) d'un aéronef (AC) en phase d'approche d'une piste d'atterrissage (T), tel que celui spécifié sous l'une quelconque des revendications 8 à 10.

**Patentansprüche**

1. Verfahren zur Unterstützung eines Flugzeugs (AC) beim Landen in der Phase des Anflugs auf eine Landebahn (T), umfassend die folgenden Schritte:

   - einen Rechenschritt (E1), der von einem Rechenmodul (2) ausgeführt wird, der darin besteht, durch Extrapolation eine Flugbahn (3) des Flugzeugs (AC) anhand einer aktuellen Position (P) des Flugzeugs (AC) zu berechnen,
   - einen ersten Bestimmungsschritt (E2), der von einem ersten Bestimmungsmodul (4) ausgeführt wird, der darin besteht zu bestimmen, ob die extrapolierte Flugbahn (3) des Flugzeugs (AC) den Boden vor einer Schwelle (S) der Landebahn (T) schneidet,
   - einen Messschritt (E3), der von einem Messmodul (5) ausgeführt wird, der darin besteht, eine aktuelle Höhe (H) des Flugzeugs (AC) über einem überflogenen Gelände (6) zu messen,
   - einen zweiten Bestimmungsschritt (E4), der von einem zweiten Bestimmungsmodul (7) ausgeführt wird, der darin besteht, zu bestimmen, ob die aktuelle Höhe (H) einer als riskante Höhe betrachteten Höhe entspricht,

   **dadurch gekennzeichnet, dass** der zweite Bestimmungsschritt (E4) darin besteht, die aktuelle Höhe (H) des Flugzeugs (AC) mit einer vorbestimmten Schwellenhöhe zu vergleichen, wobei die aktuelle Höhe (H) als riskante Höhe betrachtet wird, wenn die aktuelle Höhe (H) geringer als ein vorbestimmter Schwellenwert ist, wobei der Schwellenwert gleich der Differenz zwischen einer ersten Höhe, die einer Nennhöhe entspricht, die in einer Nennanflugbahn bei einer aktuellen Entfernung des Flugzeugs (AC) in Bezug auf die Schwelle (S) der Landebahn (T) enthalten ist, zum einen und einer zweiten Höhe, die einer Höhe entspricht, die in einer vorbestimmten Fläche in der Vertikalen zur aktuellen Position (P) des Flugzeugs enthalten ist, zum anderen ist, wobei die vorbestimmte Fläche entspricht: - einer Fläche, die Höhengrenzwerte um die Landebahn (T) herum festlegt; oder - einer Fläche, die Höhengrenzwerte um die Landebahn (T) herum bis auf eine Marge genau festlegt,

   - einen Warnschritt (E5), der von einem Warnmodul (8) ausgeführt wird, der darin besteht, eine an die Besatzung des Flugzeugs (AC) gerichtete Warnung nur dann zu erzeugen, wenn die beiden folgenden Bedingungen gleichzeitig erfüllt sind:

     ◦ die beiden Bestimmungen der beiden Bestimmungsschritte (E2, E4) sind positiv und
     ◦ das Flugzeug (AC) befindet sich in einer Entfernung in Bezug auf die Schwelle (S) der Landebahn (T), die geringer als eine vorbestimmte Schwellenentfernung ist.

2. Verfahren nach Anspruch 1, **dadurch gekennzeichnet, dass** die im Rechenschritt (E1) berechnete extrapolierte Flugbahn (3) anhand der aktuellen Position (P), der aktuellen Geschwindigkeit und der aktuellen Beschleunigung des Flugzeugs (AC) extrapoliert wird.

3. Verfahren nach einem der Ansprüche 1 oder 2, **dadurch gekennzeichnet, dass** der erste Bestimmungsschritt (E2) darin besteht zu bestimmen:

   - ob die extrapolierte Flugbahn (3) des Flugzeugs (AC) unter einer vorbestimmten Höhe in der Vertikalen der Schwelle (S) der Landebahn (T) liegt oder
   - ob die extrapolierte Flugbahn (3) des Flugzeugs (AC) auf der Höhe der Schwelle (S) der Landebahn (T) vor einer Hilfsposition liegt, die derjenigen der Schwelle (S) der Landebahn (T) entlang einer Längsachse (A) der Landebahn (T) vorgelagert ist.

4. Verfahren nach Anspruch 3, **dadurch gekennzeichnet, dass** die vorbestimmte Höhe der Höhe der Schwelle (S) der Landebahn (T) entspricht, wobei die Hilfsposition der Position der Schwelle (S) der Landebahn (T) entlang der Längsachse (A) entspricht.

5. Verfahren nach Anspruch 3, **dadurch gekennzeichnet, dass** die vorbestimmte Höhe der Höhe der Schwelle (S) der Landebahn (T) bis auf eine Marge genau entspricht, wobei die Hilfsposition der Position der Schwelle (S) der Landebahn (T) entlang der Längsachse (A) bis auf eine Marge genau entspricht.

6. Verfahren nach einem der Ansprüche 1 bis 5, **dadurch gekennzeichnet, dass** die vorbestimmte Schwellenhöhe von der horizontalen Entfernung zwischen dem Flugzeug (AC) und der Landebahn (T) abhängig ist.

**7.** Verfahren nach einem der Ansprüche 1 bis 6, **dadurch gekennzeichnet, dass** die vorbestimmte Schwellenentfernung im Wesentlichen gleich 3 NM ist.

**8.** System zur Unterstützung eines Flugzeugs (AC) beim Landen in der Phase des Anflugs auf eine Landebahn (T), umfassend:

- ein Rechenmodul (2), das darauf ausgelegt ist, durch Extrapolation eine Flugbahn (3) des Flugzeugs (AC) anhand einer aktuellen Position (P) des Flugzeugs (AC) zu berechnen,
- ein erstes Bestimmungsmodul (4), das darauf ausgelegt ist zu bestimmen, ob die extrapolierte Flugbahn (3) des Flugzeugs (AC) den Boden vor einer Schwelle (S) der Landebahn (T) schneidet,
- ein Messmodul (5), das darauf ausgelegt ist, eine aktuelle Höhe (H) des Flugzeugs (AC) über einem überflogenen Gelände (6) zu messen,
- ein zweites Bestimmungsmodul (7), das darauf ausgelegt ist zu bestimmen, ob die aktuelle Höhe (H) einer als riskante Höhe betrachteten Höhe entspricht,
- ein Warnmodul (8), das darauf ausgelegt ist, eine an die Besatzung des Flugzeugs (AC) gerichtete Warnung nur dann zu erzeugen, wenn die beiden folgenden Bedingungen gleichzeitig erfüllt sind:

  ◦ die beiden von den beiden Bestimmungsmodulen (4, 7) ausgeführten Bestimmungen sind positiv und
  ◦ das Flugzeug (AC) befindet sich in einer Entfernung (11) in Bezug auf die Schwelle (S) der Landebahn (T), die geringer als eine vorbestimmte Schwellenentfernung ist,

**dadurch gekennzeichnet, dass** das zweite Bestimmungsmodul (7) darauf ausgelegt ist, die aktuelle Höhe (H) des Flugzeugs (AC) mit einer vorbestimmten Schwellenhöhe zu vergleichen, wobei die aktuelle Höhe (H) als riskante Höhe betrachtet wird, wenn die aktuelle Höhe (H) geringer als eine vorbestimmte Schwellenhöhe ist, wobei die Schwellenhöhe gleich der Differenz zwischen einer ersten Höhe, die einer Nennhöhe entspricht, die in einer Nennanflugbahn (9) bei einer aktuellen Entfernung (11) des Flugzeugs (AC) in Bezug auf die Schwelle (S) der Landebahn (T) enthalten ist, zum einen und einer zweiten Höhe, die einer Höhe entspricht, die in einer vorbestimmten Fläche (12) in der Vertikalen der aktuellen Position (P) des Flugzeugs enthalten ist, zum anderen ist, wobei die vorbestimmte Fläche entspricht:

- einer Fläche, die Höhengrenzwerte um die Landebahn (T) herum festlegt, oder
- einer Fläche, die Höhengrenzwerte um die Landebahn (T) herum bis auf eine Marge genau festlegt.

**9.** System nach Anspruch 8, **dadurch gekennzeichnet, dass** das erste Bestimmungsmodul (4) darauf ausgelegt ist, zu bestimmen:

- ob die extrapolierte Flugbahn (3) des Flugzeugs (AC) unter einer vorbestimmten Höhe in der Vertikalen der Schwelle (S) der Landebahn (T) liegt oder
- ob die extrapolierte Flugbahn (3) des Flugzeugs (AC) auf der Höhe der Schwelle (S) der Landebahn (T) vor einer Hilfsposition liegt, die derjenigen der Schwelle (S) der Landebahn (T) entlang einer Längsachse (A) der Landebahn (T) vorgelagert ist.

**10.** System nach einem der Ansprüche 8 oder 9, **dadurch gekennzeichnet, dass** das zweite Bestimmungsmodul (7) darauf ausgelegt ist, die aktuelle Höhe (H) des Flugzeugs (AC) mit einer Schwellenhöhe zu vergleichen, wobei die aktuelle Höhe (H) als riskant betrachtet wird, wenn die aktuelle Höhe (H) geringer als eine vorbestimmte Schwellenhöhe ist.

**11.** Flugzeug, **dadurch gekennzeichnet, dass** es ein System (1) zur Unterstützung eines Flugzeugs (AC) beim Landen in der Phase des Anflugs auf eine Landebahn (T) nach einem der Ansprüche 8 bis 10 umfasst.

**Claims**

**1.** Method for aiding the landing of an aircraft (AC) in a landing runway (T) approach phase, comprising the following steps:

- a step (E1) of computation, implemented by a computational module (2), consisting in computing by extrapolation a trajectory (3) of the aircraft (AC) on the basis of a current position (P) of the aircraft (AC),

- a first step (E2) of determination, implemented by a first determination module (4), consisting in determining whether the extrapolated trajectory (3) of the aircraft (AC) cuts the ground ahead of a threshold (S) of the landing runway (T);
- a step (E3) of measurement, implemented by a measuring module (5), consisting in measuring a current height (H) of the aircraft (AC) above an overflown terrain (6),
- a second step (E4) of determination, implemented by a second determination module (7), consisting in determining whether the current height (H) corresponds to a height considered to be a risk height,

**characterized in that** the second determination step (E4) consists in comparing the current height (H) of the aircraft (AC) with a predetermined threshold height, the current height (H) being considered to be a risk height if the said current height (H) is less than the predetermined threshold height, the threshold height being equal to the difference between, on the one hand, a first height corresponding to a nominal height included in a nominal approach trajectory at a current distance of the aircraft (AC) with respect to the threshold (S) of the landing runway (T) and, on the other hand, a second height corresponding to a height included in a predetermined surface vertically in line with the current position (P) of the aircraft, the predetermined surface corresponding to:

- a surface establishing height limits around the landing runway (T), or
- a surface establishing height limits around the landing runway (T) to within a margin,

- a step (E5) of alert, implemented by an alert module (8), consisting in generating an alert intended for a crew of the aircraft (AC) only if the following two conditions are simultaneously fulfilled:

◦ the two determinations of the two determination steps (E2, E4) are positive, and
◦ the aircraft (AC) is situated at a distance with respect to the threshold (S) of the landing runway (T) which is less than a predetermined threshold distance.

2. Method according to Claim 1,
**characterized in that** the extrapolated trajectory (3) computed in computation step (E1) is extrapolated on the basis of the current position (P), of the current speed and of the current acceleration of the aircraft (AC).

3. Method according to either one of Claims 1 and 2,
**characterized in that** the first determination step (E2) consists in determining:

- whether the extrapolated trajectory (3) of the aircraft (AC) passes under a predetermined altitude vertically in line with the threshold (S) of the landing runway (T), or
- whether the extrapolated trajectory (3) of the aircraft (AC) passes, at the altitude of the threshold (S) of the landing runway (T), ahead of an auxiliary position upstream of the position of the runway (T) threshold (S) along a longitudinal axis (A) of the runway (T) .

4. Method according to Claim 3,
**characterized in that** the predetermined altitude corresponds to the altitude of the runway (T) threshold (S), the auxiliary position corresponding to the position of the runway (T) threshold (S) along the longitudinal axis (A).

5. Method according to Claim 3,
**characterized in that** the predetermined altitude corresponds to the altitude of the runway (T) threshold (S) to within a margin, the auxiliary position corresponding to the position of the runway (T) threshold (S) along the longitudinal axis (A) to within a margin.

6. Method according to any one of Claims 1 to 5,
**characterized in that** the predetermined threshold height is dependent on the horizontal distance between the aircraft (AC) and the landing runway (T).

7. Method according to any one of Claims 1 to 6,
**characterized in that** the predetermined threshold distance is substantially equal to 3 NM.

8. System for aiding the landing of an aircraft (AC) in a landing runway (T) approach phase, comprising:

- a computational module (2) configured to compute by extrapolation a trajectory (3) of the aircraft (AC) on the basis of a current position (P) of the aircraft (AC),
- a first determination module (4) configured to determine whether the extrapolated trajectory (3) of the aircraft (AC) cuts the ground ahead of a threshold (S) of the landing runway (T);
- a measuring module (5) configured to measure a current height (H) of the aircraft (AC) above an overflown terrain (6),
- a second determination module (7) configured to determine whether the current height (H) corresponds to a height considered to be a risk height,
- an alert module (8) configured to generate an alert intended for a crew of the aircraft (AC) only if the following two conditions are fulfilled:

  ◦ the two determinations carried out by the two determination modules (4, 7) are positive, and
  ◦ the aircraft (AC) is situated at a distance (11) with respect to the threshold (S) of the landing runway (T) which is less than a predetermined threshold distance,

**characterized in that** the second determination module (7) is configured for comparing the current height (H) of the aircraft (AC) with a predetermined threshold height, the current height (H) being considered to be a risk height if the said current height (H) is less than the predetermined threshold height, the threshold height being equal to the difference between, on the one hand, a first height corresponding to a nominal height included in a nominal approach trajectory (9) at a current distance (11) of the aircraft (AC) with respect to the threshold (S) of the landing runway (T) and, on the other hand, a second height corresponding to a height included in a predetermined surface (12) vertically in line with the current position (P) of the aircraft, the predetermined surface corresponding to:

  - a surface establishing height limits around the landing runway (T), or
  - a surface establishing height limits around the landing runway (T) to within a margin.

9. System according to Claim 8,
   **characterized in that** the first determination module (4) is configured to determine:

   - whether the extrapolated trajectory (3) of the aircraft (AC) passes under a predetermined altitude vertically in line with the threshold (S) of the landing runway (T), or
   - whether the extrapolated trajectory (3) of the aircraft (AC) passes, at the altitude of the threshold (S) of the landing runway (T), ahead of an auxiliary position upstream of the position of the runway (T) threshold (S) along a longitudinal axis (A) of the runway (T) .

10. System according to either one of Claims 8 and 9,
    **characterized in that** the second determination module (7) is configured to compare the current height (H) of the aircraft (AC) with a threshold height, the current height (H) being considered to be risky if the said current height (H) is less than a predetermined threshold height.

11. Aircraft,
    **characterized in that** it comprises a system for aiding the landing (1) of an aircraft (AC) in a landing runway (T) approach phase, such as that specified under any one of Claims 8 to 10.

Fig. 1

Fig. 2

Fig. 3

Fig. 4

**EP 3 476 744 B1**

**RÉFÉRENCES CITÉES DANS LA DESCRIPTION**

**Documents brevets cités dans la description**

- FR 3044298
- EP 0717330 A1
- US 2004093131 A1
- EP 0674300 A1